# EUROPÄISCHE PATENTSCHRIFT

(11) **EP 1 297 270 B1**
(45) Veröffentlichungstag und Bekanntmachung des Hinweises auf die Patenterteilung: **14.02.2007**
(21) Anmeldenummer: 01960368.7
(22) Anmeldetag: 23.06.2001
(51) Int. Cl.: F16H 37/04

(54) **SCHALTANORDNUNG**
SWITCHING ARRANGEMENT
SYSTEME DE CHANGEMENT DE VITESSES

(30) Priorität: 01.07.2000 DE 10032117
(43) Veröffentlichungstag der Anmeldung: 02.04.2003
(73) Patentinhaber: ZF FRIEDRICHSHAFEN Aktiengesellschaft, 88038 Friedrichshafen (DE)
(72) Erfinder: BOSS, Ralf, 88079 Kressbronn (DE); GÜNTHER, Peter, 88045 Friedrichshafen (DE)
(86) Internationale Anmeldenummer: PCT/EP2001/007144
(87) Internationale Veröffentlichungsnummer: WO 2002/002965

(56) Entgegenhaltungen:
- DE-A- 4 222 035
- DE-A- 4 234 572
- US-A- 4 718 305
- US-A- 4 802 384
- US-A- 5 339 707

## Beschreibung

Die vorliegende Erfindung betrifft eine Schaltanordnung für Fahrzeuge und insbesondere Nutzfahrzeuge, nach dem Oberbegriff des Anspruchs 1.

Schaltanordnungen für Nutzfahrzeuge müssen sowohl ruckarme Bewegungen mit geringen Geschwindigkeiten als auch häufige Richtungswechsel und relativ schnelle Straßenfahrten für Transportzwecke problemlos ermöglichen. Um derart unterschiedlichen Einsatzbedingungen auf betriebssichere energiewirtschaftliche und bedienungsfreundliche Weise gerecht werden zu können, sind Schaltanordnungen mit einem großen Übersetzungsbereich und vielen Übersetzungsstufen erforderlich, die eine optimale Nutzung der angebotenen Motorzugkräfte bei allen vorkommenden Fahrgeschwindigkeiten ermöglichen.

Für bestimmte Sonderfahrzeuge ist eine schnelle Rückwärtsfahrt erforderlich. Diese schnelle Rückwärtsfahrt kann durch eine in der Schaltanordnung integrierte Wendestufe realisiert werden. Dabei werden die Vorwärtsgänge unter Verwendung der Wendestufe reversiert. Des weiteren benötigen derartige Fahrzeuge hohe Zugkräfte in den unteren Gängen, um gegebenenfalls große Hindernisse problemlos überwinden zu können, wodurch üblicherweise das Getriebe mit einem sogenannten "Crawler" versehen wird. Dies kann in Form einer einem serienmäßigen Schaltgetriebe zugeordneten Vor- oder Nachschaltgruppe erfolgen, mit der eine zusätzliche Übersetzung erzeugt wird, wodurch die Spreizung des Getriebes vergrößert wird.

Ein Beispiel eines Schaltgetriebes in Gruppenbauweise ist in der deutschen Patentanmeldung P 42 34 572 beschrieben. Dieses bekannte Schaltgetriebe weist ein vier- oder mehrgängiges Grundgetriebe und ein zweigängiges Gruppengetriebe auf, wobei ausgehend vom niedrigsten Gang des Grundgetriebes ein oder mehrere aufeinanderfolgende Gänge des Grundgetriebes nur mit einem Gang des Gruppengetriebes und ausgehend vom höchsten Gang des Grundgetriebes ein oder mehrere sich nach unten anschließende Gänge des Grundgetriebes nun mit dem anderen Gang des Gruppengetriebes geschaltet werden. Dieses bekannte Gruppengetriebe arbeitet also in Verbindung mit den unteren bzw. oberen Gänge als Split-Gruppengetriebe in Verbindung mit den mittleren Gängen jedoch als Bereichsgruppengetriebe. Das Grundgetriebe ist dabei als Planetenwechselgetriebe ausgestaltet, während das Gruppengetriebe aus einem einfachen Planetensatz mit einem Sonnenrad, einem Planetenrad und einem Hohlrad besteht. Mit diesem Schaltgetriebe in Gruppenbauweise lassen sich bis zu acht Vorwärtsgänge und ein Rückwärtsgang schalten.

Nachteilig bei einem Schaltgetriebe mit Crawler ist noch zum einen die große Baulänge, das hohe Gewicht, das hohe erforderliche Eingangsdrehmoment in den nachgeschalteten Bauteilen, z. B. dem Verteilergetriebe sowie die zusätzlichen Kosten für die Adaption sowie der hohe Herstellpreis.

Aufgabe der vorliegenden Erfindung ist es, eine Schaltanordnung für Kraftfahrzeuge und insbesondere Nutzfahrzeuge zu schaffen, mit dem sämtliche oben aufgeführten Nachteile vermieden sind und das trotzdem in den unteren Gängen hohe Zugkräfte zur Verfügung stellt.

Ausgehend von einer Schaltanordnung der eingangs näher genannten Art erfolgt die Lösung dieser Aufgabe mit den im kennzeichnenden Teil des Patentanspruchs angegebenen Merkmalen.

Erfindungsgemäß ist also vorgesehen, dass die Schaltanordnung aus einem serienmäßigen Schaltgetriebe, das eine Vielzahl von Vorwärtsgängen und mindestens einen Rückwärtsgang aufweist und aus einem dem Schaltgetriebe zugeordneten zweistufigen Wendeverteilergetriebe besteht, das einen Vorwärtsgang und einen Rückwärtsgang aufweist, wobei die Übersetzung des Rückwärtsganges des Wendeverteilergetriebes erheblich größer ist als die Übersetzung des Vorwärtsganges des Wendeverteilergetriebes, sodass die maximale Fahrgeschwindigkeit des mit dieser Schaltanordnung versehenen Fahrzeugs im Rückwärtsgang durch die Kombination mit den Vorwärtsgängen des Schaltgetriebes nahezu frei wählbar ist während bei Kombination des Rückwärtsganges des Schaltgetriebes mit dem Rückwärtsgang des Verteilerwendegetriebes ein Vorwärtsgang gebildet wird mit deutlich größerer Übersetzung als diejenige, die im ersten Gang der Vorwärtsfahrt zur Verfügung steht.

Als Schaltgetriebe kann erfindungsgemäß ein herkömmliches Seriengetriebe verwendet werden, dem das zweistufige Wendeverteilergetriebe, das einen Vorwärts- und einen Rückwärtsgang aufweist, nachgeordnet wird. Da die Übersetzung des Rückwärtsganges deutlich größer ist als die Übersetzung des Vorwärtsganges im Wendeverteilergetriebe, ist auch die maximale Fahrgeschwindigkeit des Fahrzeugs im Rückwärtsgang nahezu frei wählbar.

Durch Kombination des Rückwärtsganges des Schaltgetriebes mit dem Rückwärtsgang des Verteilerwendegetriebes erhält man aufgrund der beiden negativen Übersetzungen wieder eine positive Übersetzung, die erheblich größer ist als die vom ersten Vorwärtsgang im Schaltgetriebe zur Verfügung gestellte Übersetzung, sodass der dadurch gebildete Crawler die hohen Zugkräfte im unteren Gang zur Überwindung von großen Hindernissen durch das Fahrzeug zur Verfügung stellt.

Eine erhebliche Kostensenkung, verglichen mit den Schaltgetrieben mit Vor- oder Nachschaltgruppe, wird durch Verwendugn eines herkömmlichen Seriengetriebes gegebener Baulänge und gegebenen Gewichtes erzielt, wobei die Mehrkosten für das zweistufige Wendeverteilergetriebe erheblich, geringer sind als diejenigen für eine Vor- oder Nachschaltgruppe. Auch das dem Verteilerwendegetriebe übertragene Eingangsdrehmoment ist erheblich geringer als im Fall eines Schaltgetriebes mit Vor- oder Nachschaltgruppe, wobei zusätzlich noch der Vorteil erzielt wird einer möglichen Variation der gesamten Spreizung durch Anpassung des Rückwärtsgangsverhältnisses im Wendeverteilergetriebe.

## Patentansprüche

1. Schaltanordnung für Fahrzeuge, insbesondere Nutzfahrzeuge, mit einem serienmäßigen Schaltgetriebe das eine Vielzahl von Vorwärtsgängen und mindestens einen Rückwärtsgang aufweist, **dadurch gekennzeichnet, dass** dem Schaltgetriebe ein zweistufiges Wendeverteilergetriebe zugeordnet ist, das einen Vorwärtsgang und einen Rückwärtsgang aufweist, wobei die Übersetzung des Rückwärtsganges des Wendeverteilergetriebes erheblich größer ist als die Übersetzung des Vorwärtsganges des Wendeverteilergetriebes, sodass bei Kombination des Rückwärtsganges des Wendeverteilergetriebes mit den Vorwärtsgängen des Schaltgetriebes die maximale Fahrgeschwindigkeit des Fahrzeugs im Rückwärtsgang nahezu frei wählbar ist und bei Kombination des Rückwärtsganges des Schaltgetriebes mit dem Rückwärtsgang des Wendeverteilergetriebes eine positive Übersetzung in Vorwärtsfahrtrichtung mit deutlich größerer Übersetzung als diejenige des ersten Vorwärtsganges des Schaltgetriebes ermöglicht wird.

## Claims

1. Gear change system for vehicles, in particular for utility vehicles, with a serial main gear system comprising a plurality of forward gears and at least one reverse gear, **characterised in that** the main gear system co-operates with a two-speed reversing auxiliary gearbox comprising a forward gear and a reverse gear, and the speed ratio of the reverse gear of the reversing auxiliary gearbox is significantly higher than the speed ratio of the forward gear of the reversing auxiliary gearbox so that when the reverse gear of the reversing auxiliary gearbox is combined with the forward gears of the main gear system, the maximum driving speed of the vehicle is virtually freely selectable in the reverse gear, and when the reverse gear of the main gear system is combined with the reverse gear of the reversing auxiliary gearbox, a positive speed ratio can be achieved in the forward driving direction with a significantly higher speed ratio than that of the first forward gear of the main gear system.

## Revendications

1. Dispositif de changement de vitesse pour véhicules, en particulier pour véhicules utilitaires, comprenant une boîte de vitesses de série qui comporte une pluralité de vitesses de marche avant et au moins une vitesse de marche arrière, **caractérisé en ce qu'**à la boîte de vitesses, est combinée une boîte de transfert et d'inversion à deux rapports qui comporte une vitesse de marche avant et une vitesse de marche arrière, dans laquelle le rapport de transmission de la vitesse de marche arrière de la boîte de transfert et d'inversion est très supérieur au rapport de transmission de la vitesse de marche avant de la boîte de transfert et d'inversion, de sorte qu'en combinant la vitesse de marche arrière de la boîte de transfert et d'inversion à la vitesse de marche avant de la boîte de vitesses, on peut choisir presque à volonté la vitesse maximale du véhicule en marche arrière et qu'en combinant la vitesse de marche arrière de la boîte de vitesses avec la vitesse de marche arrière de la boîte de transfert et d'inversion, il est possible d'obtenir un rapport de transmission positif en marche avant avec un rapport de transmission très supérieur à celui de la première vitesse de marche avant de la boîte de vitesses.
